# EUROPÄISCHE PATENTSCHRIFT

(11) **EP 1 171 731 B1**
(45) Veröffentlichungstag und Bekanntmachung des Hinweises auf die Patenterteilung: **27.08.2003**
(21) Anmeldenummer: 00951391.2
(22) Anmeldetag: 15.07.2000
(51) Int. Cl.: F16L 13/14

(54) **FITTING ODER ARMATUR ZUR HERSTELLUNG EINER PRESSVERBINDUNG MIT EINEM EINGESTECKTEN ROHRENDE**
FITTING OR MOUNTING FOR PRODUCING A PRESS JOINT WITH AN INSERTED TUBE END
RACCORD OU GARNITURE POUR ETABLIR UN RACCORDEMENT SERRE AVEC UN EMBOUT TUBULAIRE EMBOITE

(30) Priorität: 21.02.2000 DE 10007914
(43) Veröffentlichungstag der Anmeldung: 16.01.2002
(73) Patentinhaber: Franz Viegener II GmbH & Co. KG., 57439 Attendorn (DE)
(72) Erfinder: VIEGENER, Walter, 57439 Attendorn (DE)
(74) Vertreter: Dantz, Jan Henning
(86) Internationale Anmeldenummer: EP0006777
(87) Internationale Veröffentlichungsnummer: WO01063160

(56) Entgegenhaltungen:
- DE-U- 29 813 935
- US-A- 4 130 302
- PATENT ABSTRACTS OF JAPAN vol. 1997, no. 01, 31. Januar 1997 (1997-01-31) & JP 08 226582 A (BENKAN CORP), 3. September 1996 (1996-09-03)

## Beschreibung

Die vorliegende Erfindung betrifft einen Fitting oder eine Armatur nach dem Oberbegriff des Anspruches 1. Ein solcher Fitting bzw. eine solche Armatur umfasst einen Anschlußstutzen zur Aufnahme eines Rohrendes, wobei zur Erstellung einer Pressverbindung der Anschlußstutzen mit dem Rohr mittels eines Presswerkzeuges kalt verformt ist.

Aus der US 4,130,302 ist ein Fitting zur Herstellung einer Verbindung mit ein oder mehreren Rohren bekannt, bei dem ein Rohr jeweils in einen nach außen offenen rohrförmigen Endabschnitt einsteckbar ist. An dem rohrförmigen Endabschnitt sind zwei nach außen hervorstehende ringförmige Wulste ausgebildet, in denen jeweils ein Dichtungsring aufgenommen ist. Durch Einstecken eines Rohres in den Endabschnitt liegen die Dichtungsringe an der äußeren Umfangsfläche des Rohres an und sorgen für eine Abdichtung der Verbindung. Beabstandet von dem Dichtbereich besitzt der Fitting Eindruckstellen, um ihn an dem Rohr zu fixieren. Ein Verpressen des Fittings im Bereich der Dichtungsringe ist jedoch nicht vorgesehen.

Um erkennen zu können, dass eine Preßstelle bei einer Pressverbindung noch nicht verpresst ist, sollte diese so lange eine gewollte Leckage aufweisen, bis sie definitiv verpresst ist.

Es ist daher Aufgabe der vorliegenden Erfindung, ein Fitting oder eine Armatur zu schaffen, bei dem vorgenannter Effekt erzielt wird.

Diese Aufgabe wird mit einem Fitting oder Armatur mit den Merkmalen des Anspruches 1 gelöst. Wenn an dem ringförmigen Wulst eine oder mehrere Aus- oder Einbeulungen vorgesehen sind, mittels der eine undichte Stelle zwischen den beiden rohrförmigen Bauteilen hergestellt wird, kann das Verpressen nicht unbemerkt vergessen werden, da ein in den Bauteilen befindliches Fluid nach außen strömt. Erst durch das Verpressen wird die Aus- oder Einbeulung derart zurückverformt, dass die Undichtigkeit behoben wird. Die so hergestellte Verbindungsanordnung weist nur ein Minimum an Bauteilen auf. Ferner ist der Fitting oder die Armatur mit der Aus- oder Einbeulung einfach herzustellen, da die Ausbeulung in dem verformbaren Endabschnitt durch einen einfachen Prägevorgang herstellbar ist. Es wird daher kein aufwendiges Mittel zum Herstellen der Undichtigkeit benötigt.

Gemäß einer vorteilhaften Ausgestaltung der Erfindung ist im Bereich der Aus- oder Einbeulung ein Abstand zwischen dem Dichtungsring und der Wand des Endabschnittes vorhanden. Dadurch wird gewährleistet, dass auch bei minimalem Druck innerhalb des rohrförmigen Bauteils ein fehlerhaftes Verpressen bemerkt wird.

Vorzugsweise ist die Ausbeulung gegenüber dem Wulst radial nach außen ausgeformt. Dadurch kann die Ausbeulung beim Verpressen nach innen gedrückt werden, so dass der Endabschnitt im Bereich der Ausbeulung dicht an dem Dichtungsring anliegt. Dies ermöglicht den Einsatz von Standardwerkzeugen, die derzeit zum Herstellen von Pressverbindungen eingesetzt werden. Ferner behält der Dichtungsring im unverpressten Zustand seine Ringform bei, so dass das innere rohrförmige Bauteil ohne Probleme in den Fitting oder Armatur eingeschoben werden kann.

Alternativ ist es möglich, die Einbeulung gegenüber dem Wulst radial nach innen einzuformen. Diese Ausbildung hat den Vorteil, dass der Dichtungsring verformt wird, was auch erkennbar ist, wenn nur das Rohr von innen betrachtet wird. Ferner ist beim Einführen des Innenrohrs ein leichter Widerstand zu spüren, der den Verwender an das Verpressen erinnert.

Eine einfache Herstellung der Aus- oder Einbeulung erfolgt durch einen Stempel, der beispielsweise einen kugelförmigen Abschnitt aufweist. Dadurch wird die Aus- oder Einbeulung ebenfalls kugelförmig ausgebildet und es werden scharfe Kanten vermieden, die Beschädigungen verursachen können.

Die Erfindung wird nachfolgend anhand von zwei Ausführungsbeispielen mit Bezug auf die beigefügten Zeichnungen näher erläutert. Es zeigen:

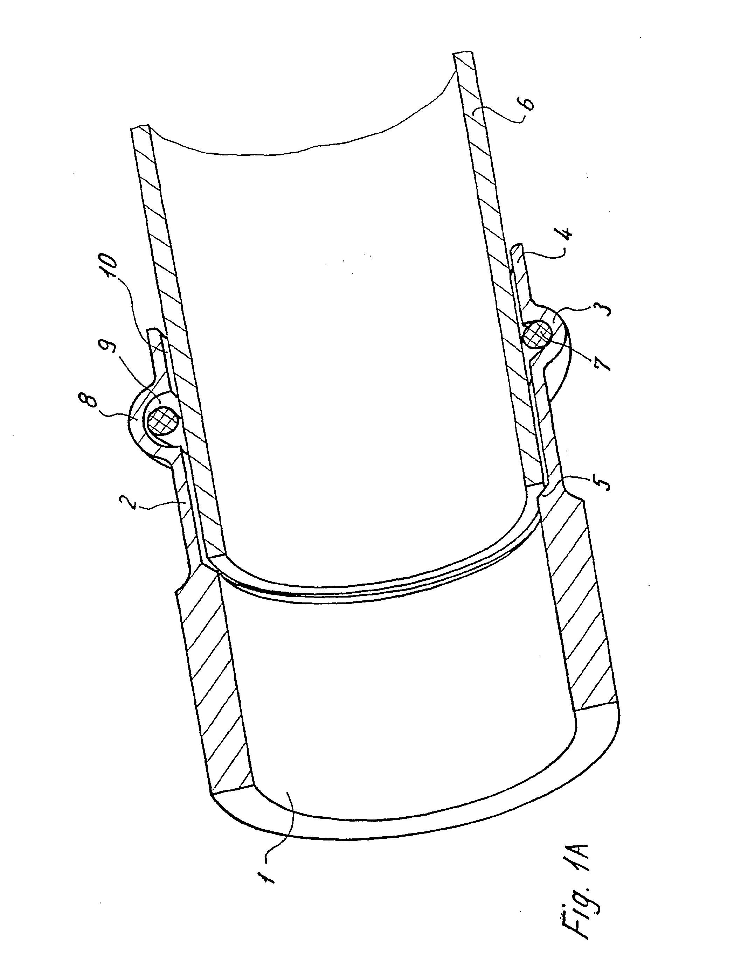

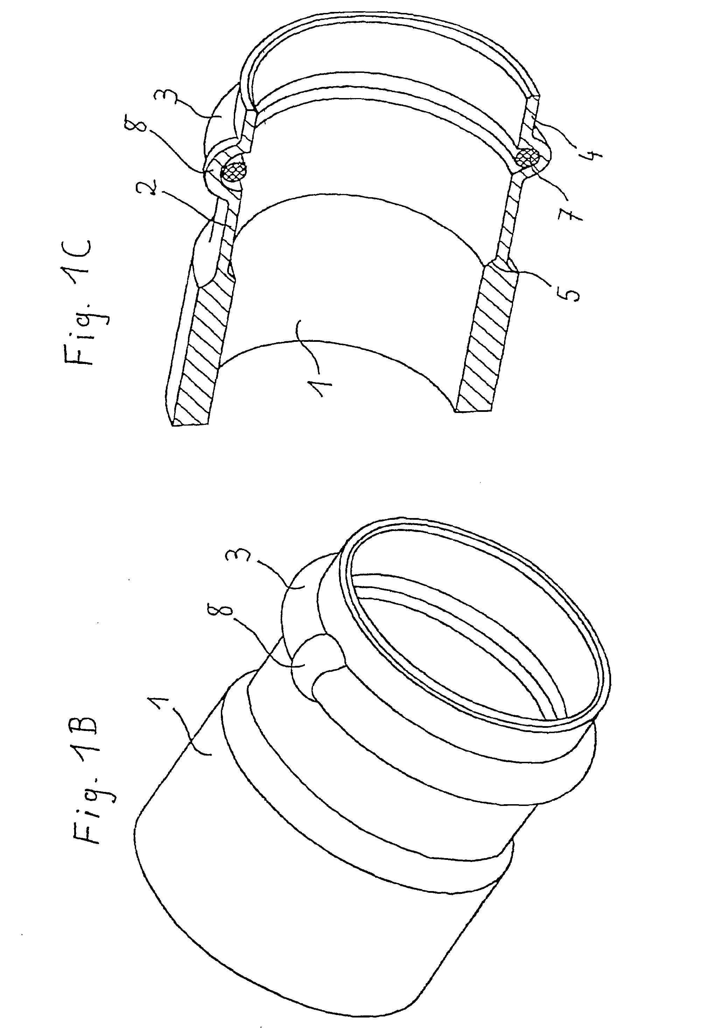

- Fig. 1A: eine perspektivische Schnittansicht eines ersten Ausführungsbeispieles eines erfindungsgemäßen Fittings oder Armatur zur Herstellung einer Verbindungsanordnung im unverpresstem Zustand;
- Fig. 1B: eine perspektivische Ansicht des Fittings oder der Armatur der Fig. 1A;
- Fig. 1C: eine perspektivische geschnittene Ansicht des Fittings oder der Armatur der Fig. 1A;
- Fig. 2: eine Querschnittsansicht der Verbindungsanordnung der Fig. 1A;
- Fig. 3: eine Querschnittsansicht der Verbindungsanordnung der Fig. 2 nach dem Verpressen;
- Fig. 4: eine Schnittansicht entlang der Linie A-B der Fig. 2;
- Fig. 5: eine Schnittansicht entlang der Linie A-B der Fig. 3;
- Fig. 6: eine Schnittansicht entlang der Linie A-C der Fig. 2;
- Fig. 7: eine Schnittansicht entlang der Linie A-C der Fig. 3;
- Fig. 8: eine perspektivische Schnittansicht eines rohrförmigen Bauteils gemäß einem zweiten Ausführungsbeispiel;
- Fig. 9: eine Querschnittsansicht des rohrförmigen Bauteils nach der Fig. 8;
- Fig. 10: eine Schnittansicht entlang der Linie A-B der Fig. 9, und
- Fig. 11: eine Schnittansicht entlang der Linie A-C der Fig. 9.

Ein Fitting oder eine Armatur 1 aus Metall, vorzugsweise Kupfer, Rotguss, Niro oder Stahl, umfasst einen Endabschnitt 2, der eine geringere Wandstärke aufweist als das übrige rohrförmige Bauteil 1. An dem Endabschnitt 2 ist ein ringförmiger Wulst 3 ausgebildet, an den sich ein Außenabschnitt 4 anschließt. Der Außenabschnitt 4 dient zur anfänglichen Führung eines Rohres 6, das in das rohrförmige Bauteil 1 eingeführt wird. Das Rohr 6 wird bis zu einem Anschlag 5 eingeführt, der am Übergang zwischen dem Endabschnitt 2 und dem Abschnitt des rohrförmigen Bauteils 1 mit dickerer Wandstärke ausgebildet ist.

In dem ringförmigen Wulst 3 liegt ein Dichtungsring 7 an, der mit geringem Spiel oder leichtem Preßsitz in dem Wulst 3 bzw. an dem Rohr 6 anliegt. In dem Wulst 3 ist eine Ausbeulung 8 ausgebildet, so dass zwischen dem Dichtungsring 7 und der Ausbeulung 8 ein Abstand 9 besteht. Da das Rohr 6 mit geringem Spiel in den Endabschnitt 2 des Fittings oder Armatur 1 eingeschoben ist und sich ein geringer Spalt 10 zwischen dem Endabschnitt und dem Rohr 6 ausbildet, kann ein Fluid, Luft oder Gas in dem rohrförmigen Bauteil bzw. im Rohr 6 über den Spalt 10 in die Ausbeulung 8 nach außen gelangen. Sollte daher das Verpressen nach dem Ineinanderstecken vergessen werden, wird dies nach Befüllung mit einem Fluid, Luft oder Gas umgehend bemerkt werden.

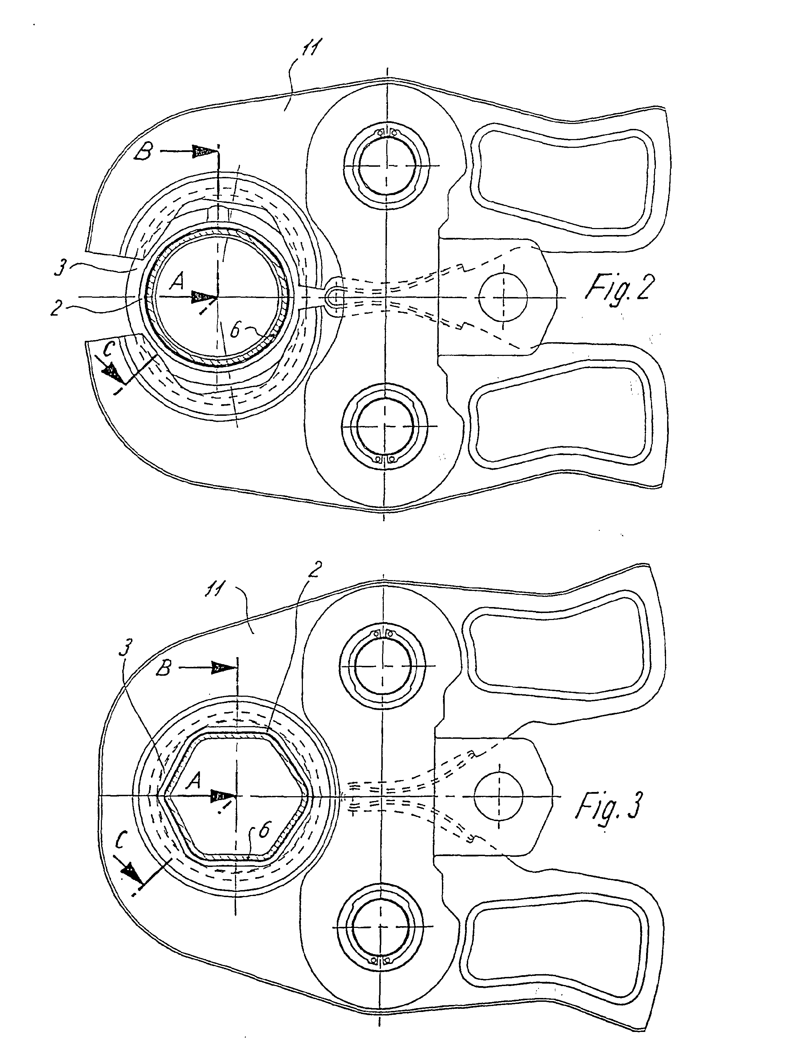

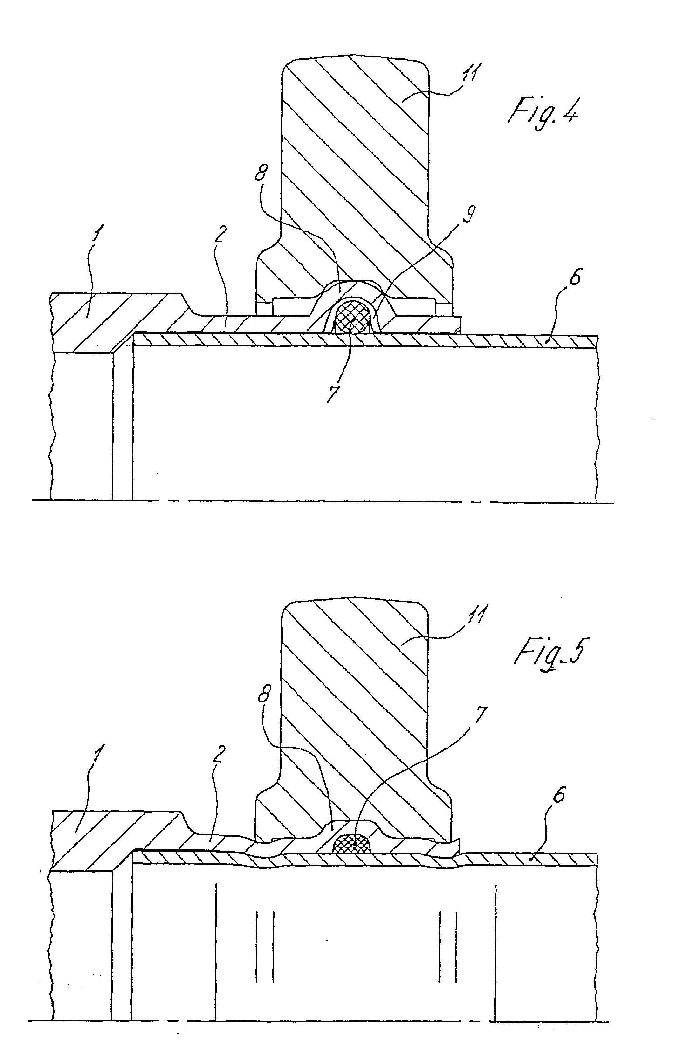

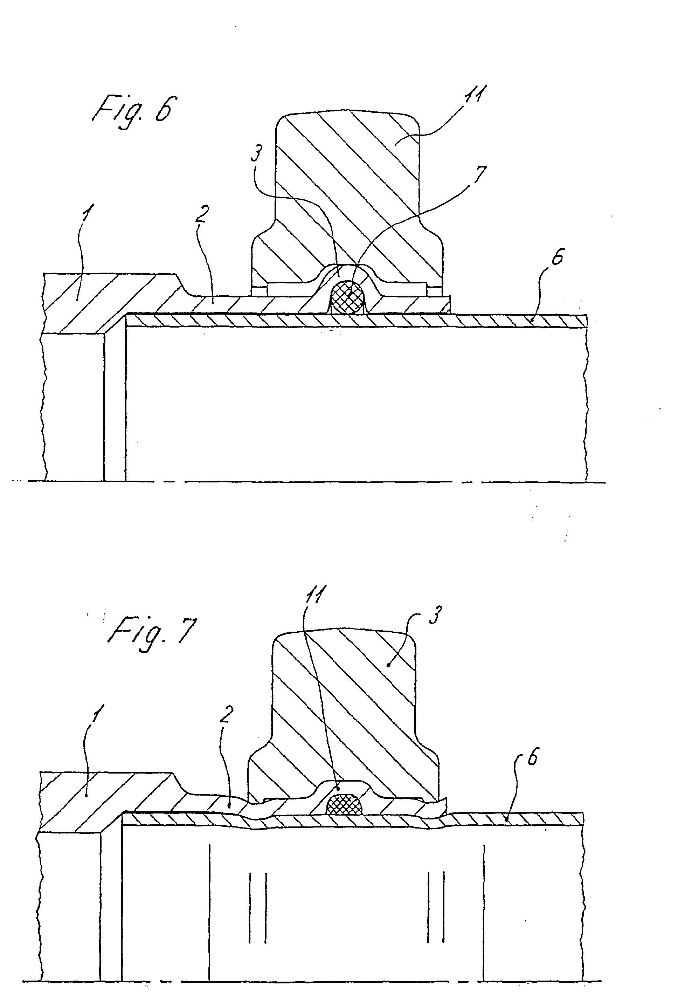

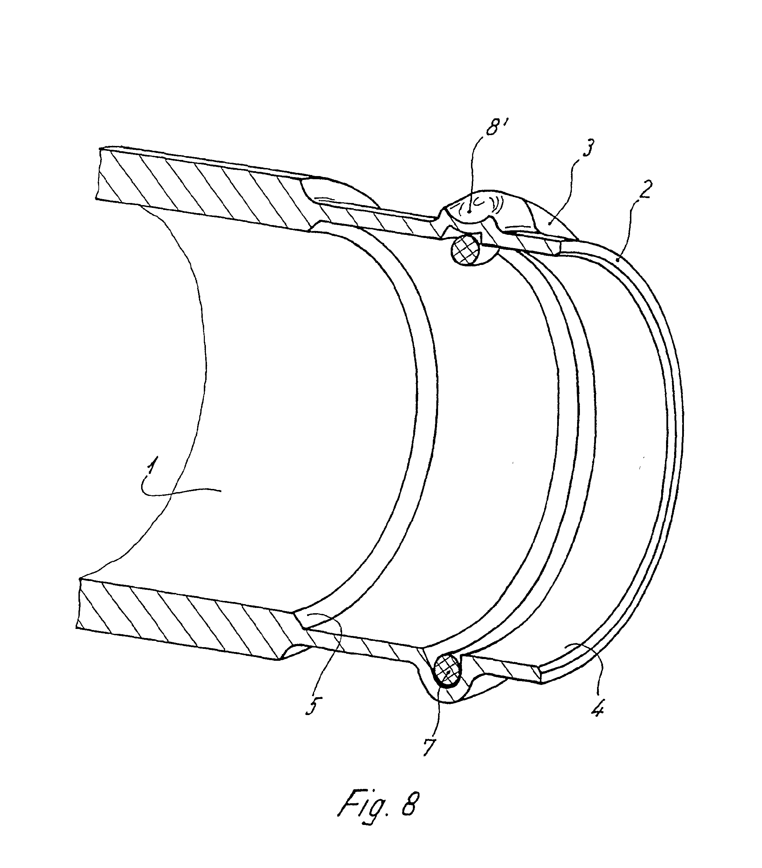

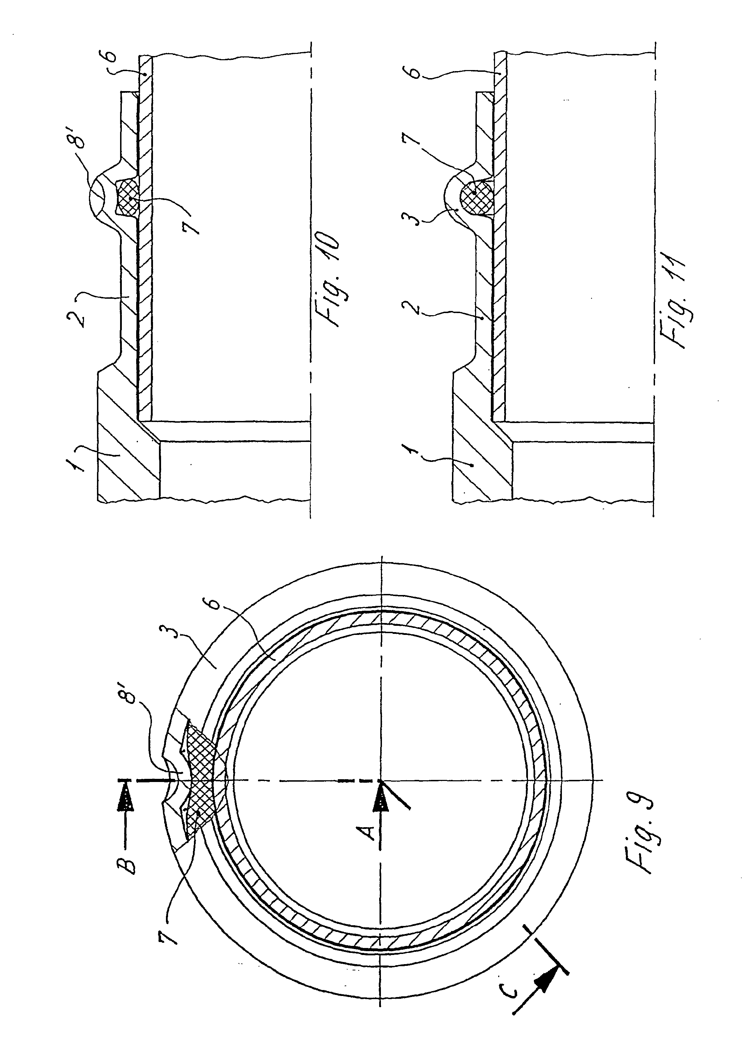

Wie aus Fig. 2 erkennbar ist, steht die Ausbeulung 8 vor dem Verpressen von dem Endabschnitt 2 hervor. Erst durch das Verpressen mit einem Presswerkzeug 11 wird die Ausbeulung 8 zurückgedrückt und eine abgedichtete Verbindung zwischen dem rohrförmigen Bauteil 1 und dem Rohr 6 hergestellt. Die Endkontur der Verbindungsstelle ist in Fig. 3 gezeigt.

Das Deformieren der Ausbeulung 8 durch das Presswerkzeug 11 ist in den Fig. 4 (unverpresster Zustand) und Fig. 5 (verpresster Zustand) erkennbar. Durch das Presswerkzeug wird der Spalt 9 zwischen der Ausbeulung 8 und dem Dichtungsring 7 beseitigt und zusätzlich der Dichtungsring 7 fest an das Rohr 6 angedrückt. Aufgrund der Irreversibilität des Pressvorgangs ist die hergestellte Pressverbindung auch für hohe Drücke geeignet.

Der Pressvorgang außerhalb der Ausbeulung 8 ist in den Fig. 6 (unverpresster Zustand) und Fig. 7 (verpresster Zustand) gezeigt. Auch an diesen Stellen wird der Dichtungsring 7 zusammen mit dem Endabschnitt 2 und dem Rohr 6 derart verformt, dass eine abgedichtete Verbindung hergestellt wird.

In Fig. 8 ist ein zweites Ausführungsbeispiel eines erfindungsgemäßen rohrförmigen Bauteiles 1 dargestellt. An dem dünnwandigen Endabschnitt 2 des rohrförmigen Bauteils 1 ist ein ringförmiger Wulst 3 ausgebildet, in dem ein Dichtungsring 7 aufgenommen ist. An dem Wulst 3 ist eine Einbeulung 8' eingeformt, die den Dichtungsring 7 radial nach innen drückt. Wie in Fig. 9 zu sehen ist, sind beidseits der Einbeulung 8' Spalte 9' zwischen dem Wulst 3 und dem Dichtungsring 7 ausgebildet. Die Form des Dichtungsringes 7 in dem Wulst 3 ist in den Fig. 10 und 11 dargestellt. Beim Verpressen des Endabschnittes 2 wird der Bereich neben der Einbeulung 8' radial nach innen gedrückt und dauerhaft deformiert, so dass der Spalt 9' zwischen Dichtungsring 7 und Wulst 3 verschwindet. Durch das Verpressen wird somit eine abgedichtete Verbindung zwischen dem rohrförmigen Bauteil 1 und dem Rohr 6 hergestellt.

In den dargestellten Ausführungsbeispielen wurde nur eine Aus- oder Einbeulung 8, 8' pro rohrförmigem Bauteil vorgesehen. Es ist auch möglich, zwei oder mehr Aus- oder Einbeulungen 8, 8' an dem Wulst 3 auszubilden. Die Aus- oder Einbeulung 8, 8' kann ferner statt der kugelförmigen Ausbildung eine andere Form, wie die Form eines Kugelabschnittes oder Kegelstumpfes, Pyramide, Kerbe, Ritze, Bohrerspitze aufweisen.

Gemäß einem weiteren Ausführungsbeispiel ist ein ringförmiger Wulst an einem Innenrohr ausgebildet, auf das ein rohrförmiges Bauteil aufgesteckt wird. Dabei ist an dem Innenrohr mindestens eine Aus- oder Einbeulung zur Erzeugung einer undichten Stelle vorgesehen.

## Patentansprüche

1. Fitting oder Armatur (1), insbesondere zum Verbinden mit einem rohrförmigen Bauteil (6), mit einem Endabschnitt (2), der zum Herstellen einer Verbindung verpressbar ist und einen ringförmigen Wulst (3) aufweist, in dem ein Dichtungsring (7) angeordnet ist, **dadurch gekennzeichnet, dass** an dem Wulst (3) mindestens eine Aus- oder Einbeulung (8, 8') vorgesehen ist und im Bereich der Aus- oder Einbeulung (8, 8') ein Abstand (9, 9') zwischen dem Dichtungsring (7) und der Wand des Endabschnittes (2) vorhanden ist, so daß eine gewollte Lechage zwischen rohrförmigem Banteil (6) und fitting oder Armatur (1) vor dem Verpressen des Endabschnitts (2) vorhanden ist.

2. Fitting oder Armatur nach Anspruch 1, **dadurch gekennzeichnet, dass** die Ausbeulung (8) gegenüber dem Wulst (3) radial nach außen ausgeformt ist.

3. Fitting oder Armatur nach Anspruch 1, **dadurch gekennzeichnet, dass** die Einbeulung (8') gegenüber dem Wulst (3) radial nach innen eingeformt ist.

4. Fitting oder Armatur nach einem der vorhergehenden Ansprüche 1 bis 3, **dadurch gekennzeichnet, dass** die Aus- oder Einbeulung (8, 8') die Form eines Kugelabschnittes oder Kegelstumpfes, Pyramide, Kerbe, Ritze, Bohrerspitze aufweist.

5. Verbindungsanordnung zwischen einem Fitting oder Armatur und einem rohrförmigen Bauteil (1, 6), die über einen Dichtungsring (7) abgedichtet aneinander gehalten sind, **dadurch gekennzeichnet, dass** das Fitting oder die Armatur (1) nach einem der vorhergehenden Ansprüche ausgestaltet ist.

## Claims

1. Fitting (1), in particular for connecting to a tubular component (6), having an end section (2) which can be crimped in order to produce a connection and has an annular bead (3), in which a sealing ring (7) is arranged, **characterized in that** at least one bulge or indentation (8, 8') is provided on the bead (3), and there is a clearance (9, 9') between the sealing ring (7) and the wall of the end section (2) in the region of the bulge or indentation (8, 8'), so that there is deliberate leakage between tubular component (6) and fitting (1) before the crimping of the end section (2).

2. Fitting according to Claim 1, **characterized in that** the bulge (8) is shaped radially outwards relative to the bead (3).

3. Fitting according to Claim 1, **characterized in that** the indentation (8') is shaped radially inwards relative to the bead (3).

4. Fitting according to one of the preceding claims 1 to 3, **characterized in that** the bulge or indentation (8, 8') has the shape of a spherical segment or a truncated cone, pyramid, notch, slit, drill point.

5. Connecting arrangement between a fitting and a tubular component (1, 6) which are held against one another in a sealed-off manner via a sealing ring (7), **characterized in that** the fitting (1) is designed according to one of the preceding claims.

## Revendications

1. Raccord ou garniture (1), en particulier destiné à être raccordé à un composant tubulaire (6), comprenant un tronçon terminal (2) qui, pour établir une liaison, est susceptible d'être serti, et un bourrelet annulaire (3) dans lequel est placée une bague d'étanchéité (7), **caractérisé en ce qu'**est prévu, sur le bourrelet (3), au moins un bossage ou un renfoncement (8, 8') et **en ce qu'**est présent, dans la zone du bossage ou du renfoncement (8, 8'), un écart (9, 9') entre la bague d'étanchéité (7) et la paroi du tronçon terminal (2), pour permettre une fuite voulue entre le composant tubulaire (6) et le raccord ou la garniture (1) avant le sertissage du tronçon terminal (2).

2. Raccord ou garniture (1) selon la revendication 1, **caractérisé en ce que** le bossage (8) est déformé radialement vers l'extérieur, par rapport au bourrelet (3).

3. Raccord ou garniture (1) selon la revendication 1, **caractérisé en ce que** le renfoncement (8') est déformé radialement vers l'intérieur, par rapport au bourrelet (3).

4. Raccord ou garniture (1) selon l'une des revendications précédentes 1 à 3, **caractérisé en ce que** le bossage ou le renfoncement (8, 8') présente la forme d'un segment sphérique ou d'un tronc de cône, d'une pyramide, d'une encoche, d'une fente ou d'une mèche.

5. Dispositif de raccordement entre un raccord ou une garniture et un composant tubulaire (1, 6), qui sont maintenus l'un contre l'autre de façon étanche grâce à une bague d'étanchéité (7), **caractérisé en ce que** le raccord ou la garniture est conformé selon l'une des revendications précédentes.
